# EUROPÄISCHE PATENTSCHRIFT

(11) **EP 0 934 128 B1**
(45) Veröffentlichungstag und Bekanntmachung des Hinweises auf die Patenterteilung: **09.01.2002**
(21) Anmeldenummer: 97945734.8
(22) Anmeldetag: 10.10.1997
(51) Int. Cl.: B07C 3/20

(54) **VERFAHREN UND VORRICHTUNG ZUR ONLINE-BEARBEITUNG VON WEITERZULEITENDEN SENDUNGEN**
METHOD AND DEVICE FOR ONLINE PROCESSING OF FORWARDING MAIL
PROCEDE ET DISPOSITIF POUR LE TRAITEMENT EN LIGNE DE COURRIER A EXPEDIER

(30) Priorität: 24.10.1996 DE 19644163
(43) Veröffentlichungstag der Anmeldung: 11.08.1999
(73) Patentinhaber: Siemens Dematic AG, 90475 Nürnberg (DE)
(72) Erfinder: UHL, Berthold, D-88697 Bermatingen (DE); IRION, Astrid, D-78462 Konstanz (DE); ROSENBAUM, Walter, F-75116 Paris (FR)
(74) Vertreter: Zedlitz, Peter, Dipl.-Inf.
(86) Internationale Anmeldenummer: DE9702326
(87) Internationale Veröffentlichungsnummer: WO9817405

(56) Entgegenhaltungen:
- EP-A- 0 282 357
- EP-A- 0 589 119
- US-A- 4 979 605
- US-A- 5 422 821

## Beschreibung

Die Erfindung bezieht sich auf eine online-Bearbeitung von weiterzuleitenden Sendungen und Methoden, bei denen die optische Zeichenerkennung von postalischen Adressen durch den Einsatz von Videocodiertechniken verbessert wird.

Das automatische Lesen von Briefanschriften mit Hilfe der optischen Zeichenerkennung (OCR) ist eine fest eingeführte Technologie im postalischen Alltag. Verarbeitungsraten bis zu 10 Sendungen pro Sekunde (36.000 Sendungen pro Stunde) sind mit modernen Anschriftenlesern möglich. Die Zuverlässigkeit der Erkennung hängt in großem Maße von der Gestalt der Schriftzeichen und von der Qualität des Ausdrucks ab. Wenn die Erkennung erfolgreich abläuft, wird ein maschinenlesbarer Barcode aufgedruckt. Dieser Barcode erlaubt die schrittweise mechanische Trennung der Sendungen, bis die gewünschte Sortierung erreicht ist. Gerade die Technik der Barcodes ermöglicht die stufenweise Sortierung (Multi-Pass) der Sendungen bis sie in der Gangfolge des Zustellers sortiert sind.

Da die Leseraten jedoch so unterschiedlich sind, muß die automatische Betriebsart durch verschiedene manuelle Eingriffe unterstützt werden. Die einfachste Methode, nichtlesbare Sendungen zu bearbeiten, ist sie in der Maschine zurückzuweisen und sie von Hand unter Benutzung von Sortierspinds zu sortieren. Die Kosten für diese Art der Sortierung und Zustellung sind jedoch unverhältnismäßig hoch, vor allem wenn die Personalkosten ansteigen. Ferner kommt noch hinzu, daß die handsortierten Sendungen in keiner Phase automatisch verteilt werden können. So entstehen zwei Briefströme, die an irgendeiner Stelle wieder zusammengeführt werden müssen.

Um die Nachteile manueller Sortierung von im OCR zurückgewiesenen Sendungen zu vermeiden, wurden verschiedene Ansätze zur manuellen Codierung der Sendungen entwickelt. Alle Methoden basieren auf Bedienkräften, die Teile der Anschrift eintippen, so daß das Ziel "Barcodieren der Sendungen" erreicht wird. Nachdem die Sendungen einen Barcode erhalten haben, sind sie genauso verarbeitbar wie direkt OCR codierte Sendungen.

Das Nachsenden von Sendungen ist ein seit langem bekanntes Problem. Trotzdem wird heute der größte Teil der Sendungen manuell nachgesandt.

In der heutigen Form kommen beim manuellen Nachsenden die Sendungen mit der falschen (alten) Adresse zum Zusteller des alten Bezirkes. Für die Sortierung der Sendungen in die Gangfolge benutzt der Zusteller einen Verteilspind, dessen Fachzahl gleich der maximalen Zahl der Zustellpunkte in seinem Zustellbezirk entspricht. Wenn ein Nachsendeantrag gestellt wird, wird dem Zusteller des alten Bezirks eine Nachsendemerkkarte mit der neuen Adresse zugesandt.

Die Nachsendemerkkarte wird in das entsprechende Fach gelegt. Während der Gangfolgesortierung werden nachzusendende Sendungen in Fächer mit Nachsendemerkkarten nicht einsortiert. Statt dessen schreibt der Zusteller die neue Adresse auf den Umschlag und übergibt die Sendung der manuellen Bearbeitung.

In Systemen, die weiterentwickelt sind, identifiziert der Zusteller nachzusendende Briefe, nimmt sie aus dem Briefstrom heraus und schickt sie an ein zentrales Bearbeitungszentrum für nachzusendende Briefe. Mit Hilfe von Extraktionstechniken gibt das Bedienpersonal die ungültige Adresse in einen Computer ein, der an eine zentrale Datenbank angeschlossen ist Die Datenbank enthält Informationen über alle Nachsendeanträge und zeigt sowohl die neue Adresse als auch eine Namensliste mit Personen, die Nachsendeanträge gestellt haben, auf dem Bildschirm an. Das Bedienpersonal sucht den auf dem Briefumschlag angegebenen Namen in der Liste. Sobald die geschehen ist, wird ein neues Label mit der neuen Adresse entweder automatisch oder manuell appliziert. Das Label wird dabei so positioniert, daß die alte Barcode abgedeckt ist. Dadurch kann der Brief mit den restlichen Sendungen wieder automatisch gelesen und codiert werden. Der Nachteil dieses Verfahrens ist der hohe manuelle Aufwand für die Bearbeitung und die Abtrennung von nachzusendenden Sendungen aus dem normalen Briefstrom. Dies hat Verzögerungen und Umwege für nachzusendende Sendungen zur Folge. (Computer Forwarding System II der USPS).

Systeme, die noch höher entwickelt sind, benutzen OCR-Technologie. In diesem Falle werden nachzusendende Sendungen wieder vom Zusteller abgefangen, mit Stempeln, wie "Verzogen, Adresse unbekannt" versehen und an ein automatisches Nachsendezentrum geschickt. Das Nachsendezentrum ist mit Anschriftenlesern ausgestattet, die für alle nachzusendenden Sendungen automatisch die Empfänger- und Absenderadresse erkennen. Mit Hilfe einer Nachsendedatenbank wird die neue Adresse bestimmt. Der Anschriftenleser kann alle Zustellervermerke, Vorausverfügungen und sonstige Merkmale lesen und auswerten. Die Auswertung der Merkmale erlaubt die Entscheidung, wie mit den Sendungen weiter zu verfahren ist. In einem weiteren Automationsschritt wird auf die Sendung ein Label mit der neuen Adresse aufgebracht. Nachdem auch der Barcode aufgedruckt wurde, wird die Sendung wieder in den regulären Briefstrom für die Zustellung eingeschleust.

In der US-PS 5422821 wird ein System zur Weiterleitung inkorrekt adressierter Sendungen beschrieben, das nachzusendende Sendungen in einer früheren Stufe der Briefbearbeitung erkennt und zwischen maschinenlesbaren und maschinenunlesbaren Sendungen unterscheidet.
Nach Aufnahme eines Bildes von der Adreßseite der Sendung einschließlich der Digitalisierung erfolgt das Lesen von Namen und Adresse des Empfängers mittels OCR-Leser. Danach wird in einer USPS ZIP+4 Datenbasis der ZIP-Code des Verteilpunktes festgelegt. Anschließend wird in einer USPS National Change of Address (NCOA) Datenbasis ermittelt, ob eingetragene Weiterleitungsanforderungen vorhanden sind. Gleichzeitig werden auch auf den Sendungen befindliche Weiterleitungsaufschriften automatisch ausgewertet. Während der Zeit des Ermittelns der richtigen Adresse befinden sich die Sendungen in einer mechanischen Verzögerungsstrecke/Zwischenspeicher.
Kann die Adresse einschließlich ZIP+4 Code in der Zeit, in der sich die jeweilige Sendung in der Verzögerungsstrecke befindet, nicht automatisch ermittelt werden, so werden die Bilder mit einer identifikationsnummer abgespeichert. Anschließend wird diese ID-Nr. als Bar-Codeauf die Sendung aufgedruckt und die Weiterverarbeitung erfolgt off-line mit Hilfe der Video-Codierung in der oben beschriebenen Art, wobei diese Sendungen aus dem Sendungsstrom ausgeschleust und in einem speziellen Sortierfach gesammelt werden. Wird die richtige Adresse während der Verweilzeit der jeweiligen Sendung in der Verzögerungsstrecke ermittelt, so wird ein Label auf die falsche Adresse appliziert, auf das die neue Adresse gedruckt wird. Ein Barcode-Sorter verteilt die Sendungen dann gemäß des aufgedruckten neuen Barcodes. Dieser Vorgang läuft online ab.
Der in den unabhängigen Ansprüchen 1 und 8 angegebene Erfindung liegt das Problem zugrunde, zur Erhöhung der online bearbeitbaren weiterzuleitenden Sendungen die Videokodiertechnik in die OCR-Lesetechnik so einzubeziehen, daß während der Verweilzeit der Sendungen in einem Zwischenspeicher weitere, nicht mittels OCR-Lesetechnik automatisch lesbare Sendungen ausgewertet werden können.
Ob und wohin eine Sendung weiterzuleiten ist, ergibt sich aus den Weiterleitungsaufschriften oder Namens- und zustellpunktbezogenen Weiterleitungsdateien.

Die mit der Erfindung erzielten Vorteile bestehen insbesondere darin, daß durch die erfindungsgemäße priorisierte Videokodierung der weiterzuleitenden Sendungen nicht automatisch mittels OCR-Leser eindeutig erkannten Empfängernamen und -adressen in die online-Bearbeitung einbezogen werden können.
Weitere vorteilhafte Ausgestaltungen der Erfindung sind in den Unteransprüchen angegeben.

Die in den Ansprüchen 2-4 dargelegte mehrstufige Einbeziehung der Videokodierung in den automatischen OCR-Lesevorgang ermögliht eine schnelle Namen- und Adreßerkennung mit effektivem Einsatz des Videokodierpersonais. Besonders vorteilhaft wird dieser Vorgang durch die effektive Verwendung der Extraktionskodierung und der Selektionskodierung gestaltet, wodurch eine Entscheidungsvereinfachung für das Videokodierpersonal erreicht wird.

Zur Verbesserung der Leserate werden in weiteren vorteilhaften Ausgestaltungen gemäß der Ansprüche 5 und 6 auch bei nichteindeutig automatisch gelesenen Nach- und Rücksendeaufschriften oder Absenderadressen diese einer Videokodierung zugeführt.

In folgenden wird die Erfindung anhand der Zeichnungen näher beschrieben.

Dabei zeigen
- Fig. 1: ein Funktionsblockschema des online-Bearbeitungssystems
- Fig. 2: ein Flußdiagramm des Funktionsablaufes des online-Bearbeitungssystems (Teil 1)
- Fig. 3: ein Flußdiagramm des Funktionsablaufes (Teil 2)
- Fig. 4: ein Flußdiagramm des Funktionsablaufes des online-Bearbeitungssystems (Teil 3)
- Fig. 5: ein Flußdiagramm des Funktionsablaufes des online-Bearbeitungssystems (Teil 4) zur Videokodierung
- Fig. 6: eine Übersicht über den Datenfluß beim mehrstufigen Videokodieren (3. Phase)
- Fig. 7: einen Nachzusenden Brief
- Fig. 8: einen an den Absender rückzusendenden Brief
- Fig. 9: einen an den Absender rückzusenden Brief, bei dem der Absender seine Postkundennr. und seine Vorausverfügung codiert ins Empfängeradreßfeld gedruck hat
- Fig. 10: eine Brief, der beim Posteingang nicht als weiterzuleitender Brief erkannt wurde
- Fig. 11: den Brief gem. Fig. 10 durch den Zusteller zur Rücksendung gestempelt mit Leerlabel über Barkode
- Fig. 12: den Brief gem. Fig. 11 nach Behandlung im erfindungsgemäßen System
- Fig. 13: eine Maschinenkonfiguration des online-Systems als Blockschaltbild

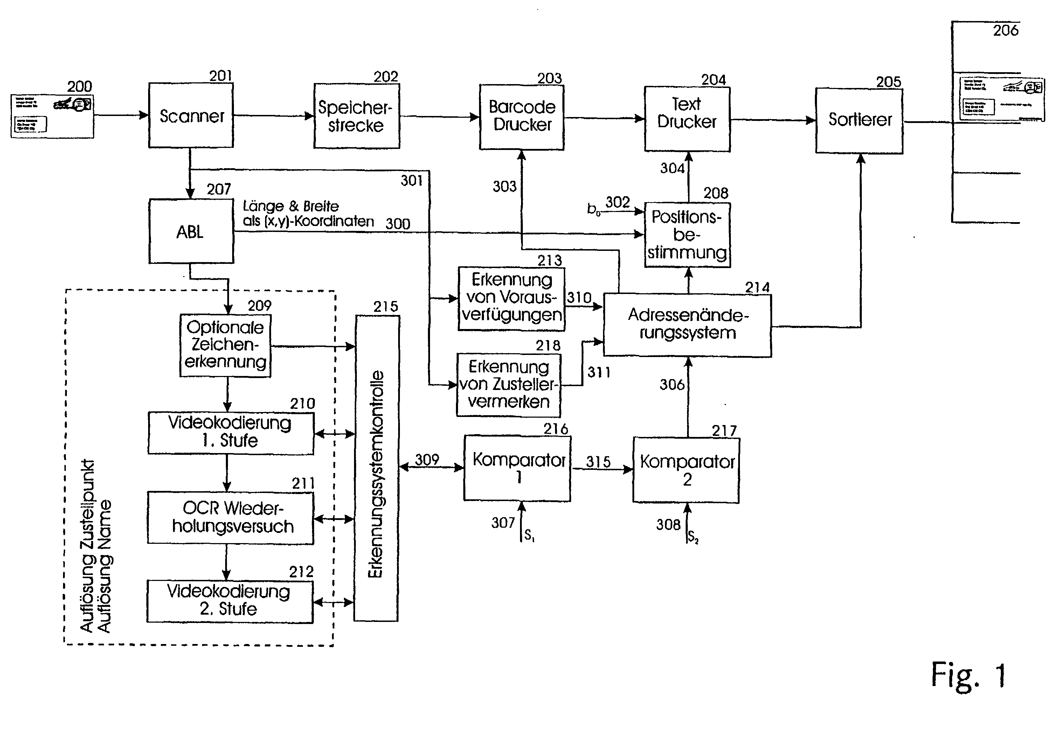

Gemäß Fig. 1 bezeichnet die Referenznummer 200 eine Sendung, wie z.B. einen Briefumschlag, der daraufhin untersucht wird, ob ein Nach- oder Rücksenden erforderlich ist. Ein Graubildscanner 201 scannt die Umschlagsoberfläche optisch ab und und präpariert das gescannte Bild für die nachfolgenden Schritte "Optische Zeichenerkennung" (OCR) und "Darstellung an einem Videokodierplatz". Dann übersendet der Scanner das Bild 301 an eine Adressblockbestimmung (Address Block Location (ABL)) 207, eine Erkennung von Vorausverfügungen 213 und eine Erkennung von Zustellervermerken 218. Die Sendung selbst wird in einer Verzögerungsstrecke 202 eines Anschriftenlesers physikalisch gepuffert.

Die Adressblockbestimmung (ABL) 207 stellt die Position und Ausmaße des Adressblocks fest. Das Pixelbild des gefundenen Adressblocks wird einer Optischen Zeichenerkennung 209 übergeben, die das Pixeibild in einen Zeichenstring mit Glaubwürdigkeitsabschätzungen und Alternativen für Einzelzeichen umwandelt. Alle in der Adresse enthaltenen Textteile, die zur Bestimmung eines Zustellpunktes notwendig sind, werden erkannt. Eine Erkennungssystemkontrolle 215 übergibt die Erkennungsergebnisse 309 einem ersten Komparator 216, der unter Einsatz von kontextuellem Wissen 307 über alle möglichen Adressen aus einer Namen-Adreß-Datenbank, Wörterbuch genannt, die Erkennungsergebnisse verbessert. Wenn kein erfolgreicher Abgleich mit dem Wörterbuch erreicht werden kann, wird der Adressblock an die Videokodierung weitergereicht.

Das Zeichenerkennungssystem wird von einem online Videokodiersystem mit 3 verschiedenen Phasen ergänzt:
∗ Phase 1: Videokodierung1.Stufe 210:
   Das Videokodierpersonal gibt einen kurzen, leicht erkennbaren Extrakt fester Länge ein, der die Abgangs- und einen Teil der Eingangsadressinformation auflöst. Falls mit diesem Extrakt ein eindeutiger Wörterbuchabgleich möglich ist, ist die Adresse bis zum Zustellpunkt aufgelöst.
∗ Phase 2: OCR Wiederholungsversuch 211:
   FürAdressen, deren Extrakt mehr als einen Wörterbucheintrag als richtige Auflösung zulassen, wird die Zeichenerkennung mit dem aus der Videokodierung Stufe 1 gewonnenen Zusatzwissen erneut gestartet. Diese zusätzliche Information erhöht die Wahrscheinlichkeit einer korrekten Entscheidung der OCR im 2. Versuch ganz entscheidend.
∗ Phase 3: Videokodierung 2. Stufe (auch Selektionsphase genannt) 212:
   Die nach dem OCR Wiederholungsversuch noch nicht eindeutig aufgelösten Adressen werden auf einen Videokodierplatz zusammen mit den möglichen richtigen Wörterbucheinträgen aufgeschaltet. Das Videokodierpersonal wird aufgefordert die Abschließende Entscheidung durch einen Tastendruck zu treffen.

Eine Erkennungssystemkontrolle 215 überwacht und steuert alle nötigen Interaktionen zwischen der Optischen Zeichenerkennung und dem Videokodiersystem.

Nach Durchlaufen der Optischen Zeichenerkennung und evtl. zusätzlich einer oder mehrerer Phasen des Videokodiersystems und einem Wörterbuchabgleich ist der Zustellpunkt der zu untersuchenden Sendung bekannt. Sobald der Zustellpunkt gefunden wurde, wird an einen zweiten Komparator 217 das Signal 315 geschickt. Der zweite Komparator verfügt durch das Signal 308 aus einer Weiterleitungsdatei über alle Informationen bzgl. Nachsendeanträgen (mit jeweils alter und neuer Adresse). Wenn er in der zu untersuchenden Sendung einen Nachsendekandidaten erkennt, wird ein Signal 306 zu einem Addressänderungssystem 214 übertragen.

Auch andere Signale werden zum Adressänderungssystem übertragen: Eine Erkennung von Zustellervermerken 218 erkennt die Aufdrucke der Rücksendestempel, die von den Zusteilem verwendet werden und schickt ein Signal 311, wenn ein solcher erkannt wird. Eine Erkennung von Vorausverfügungen stellt Vorausverfügungen wie "Falls Empfänger verzogen, bitte zurück an den Absender" fest und schickt ein Signal 310 an das Adressänderungssystem 214, falls eine Vorausverfügung erkannt wird. Um eine Rücksendung durchzuführen, ist es außerdem notwendig, die Absenderadresse zu lesen. Dies wird von der Optischen Zeichenerkennung und dem Videokodiersystem übernommen.

Das Addressänderungssystem 214 bestimmt die Zieladresse der zu untersuchenden Sendung aufgrund der Signale 306, 310 und 311. Wenn es sich um eine Nachsendung handelt, so ist die Zieladresse die neue Adresse des Empfängers. Bei einer Rücksendung ist die Adresse des Absenders die Zieladresse der Sendung. Der Barcode der Zieladresse 303 wird durch einen Barcodedrucker 203 auf die Sendung aufgebracht. Zusätzlich wird durch einen Textdrucker 204 ein Nachsendevermerk und die neue Adresse, bzw. ein Rücksendevermerk in Klartext auf die Sendung gedruckt. Die Position der Vermerke und zusätzlich der neuen Adresse nur bei Nachsendungen auf der Sendung wird durch eine Postitionsbestimmung 208 festgelegt. Die Positionsbestimmung erhält von der Adressblockbestimmung 207 die Information über Länge, Breite und Lage des Adressblocks auf der Sendung (Signal 300) sowie die Ausmaße der Sendung selbst 302. Sie sendet ein Signal 304 an den Textdrucker, das die Position des zu druckenden Textes bezeichnet Normalerweise wird der Text rechts oder links neben der (alten) Empfängeradresse aufgedruckt. Um diesen Text hervorzuheben, wird er in roter Farbe und fett gedruckt. Der Aufdruck sollte auch dann noch vom Zusteller lesbar sein, wenn auf der Sendung an dieser Stelle ein Hintergrundmuster aufgebracht ist.

Die Sendung wird anschließend entsprechend ihrer Zieladresse sortiert 205 und in das entsprechende Grobverteilfach 206 ausgeleitet.

Sendungen, die keiner Umleitung (Nach- oder Rücksenden) bedürfen, werden wie gewöhlich nur mit den Zielbarcode bedruckt.

Alle bisher beschriebenen Prozesse werden ausgeführt, während sich die Sendung in der Verzögerungsstrecke eines Anschriftenlesers befindet. Daher wird sich eine ganz signifikante Menge von Sendungen online bearbeiten und ggf. auch umleiten lassen.

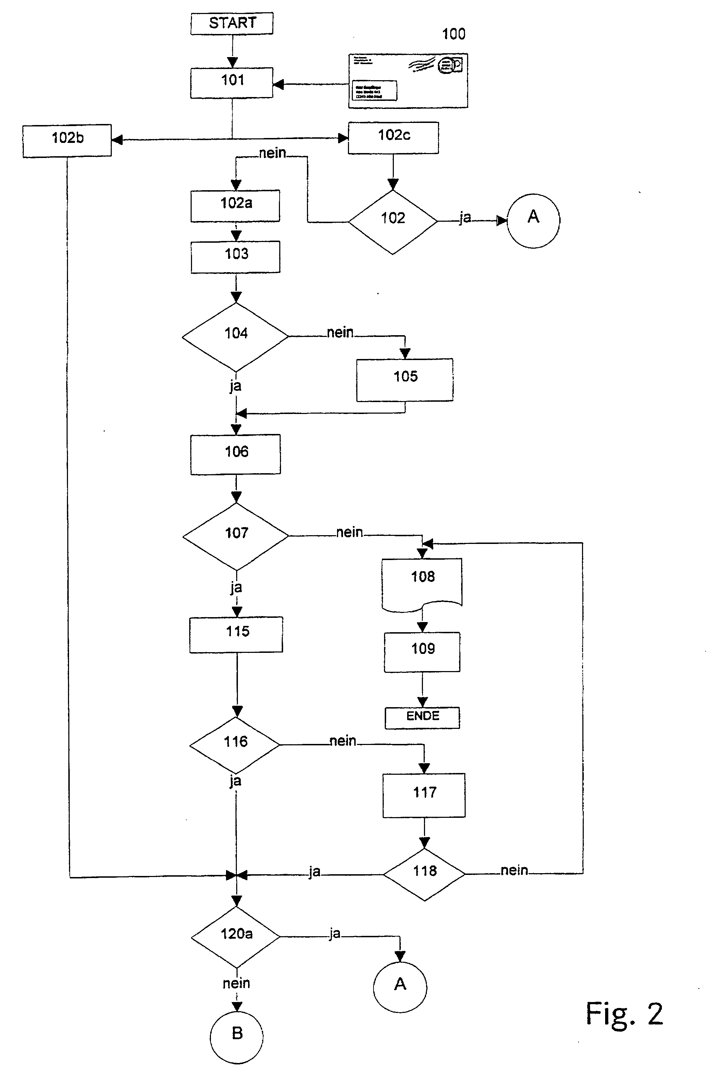

Die zusammengehörigen Figuren 2, 3 und 4 geben einen detaillierten Überblick über den Verfahrensablauf für die automatische Verarbeitung von Nach- und Rücksendungen. Eine Sendung 100 wird im Verarbeitungsschritt 101 gescannt. Das gescannte Bild wird an die Erkennung von Vorausverfügungen 102b und an die Erkennung von Zustellervermerken 102c geschickt. Wenn ein Zustellervermerk erkannt wird, wird eine Rücksendebehandlung durchgeführt. Falls kein Zustellervermerk vorhanden ist, wird das Pixelbild an die Bilderkenung 102a geschickt. Dort wird die gesamte Adressinformation einschl. Zustelipunkt und Empfängername erkannt.

Um das Leseergebnis zu verbessern, wird beim anschl. Wörterbuchabgleich 103 Kontextinformation benutzt. Das Wörterbuch enthält alle Adressinformation bis zu den einzelnen Zustellpunkten. Wenn der Abgleich mit dem Wörterbuch 104 kein eindeutiges Ergebnis liefert, wird die fehlende Information durch ein 3-Phasen-Videokodieren 105 ergänzt. Mit dem so bestimmten Zustellpunkt wird in einer Weiterleitungsdatenbank 106, ob dieser Zustellpunkt zumindest einen Weiterleitungsantrag 107 besitzt. Sowohl im Wörterbuch als auch in der Weiterleitungsdatenbank sind alle möglichen, richtigen verschiedenen Schreibarten der Adressen gespeichert, um eine möglichst hohe Wiedererkennungsrate zu garantieren.

Falls der zu untersuchende Zustellpunkt keinen Weiterleitungsantrag besitzt, was zu ca. 95% der Fall sein wird, wird die Zieladresse in Form eines Barcodes auf die Sendung aufgebracht 108 und die Sendung entsprechend ihrer Zieladresse sortiert 109.

Im anderen Fall, falls also der Zustellpunkt zumindest einen Nachsendeantrag besitzt, so muß der Name des Empfängers identifiziert werden. Zu diesem Zweck besitzt die Weiterleitungsdatenbank eine komplette Liste der Personen, die diesem Zustellpunkt zugeordnet sind. Der Name, der vom Zeichenerkennungssystem gelesen wurde, wird mit der Liste von Namen aus der Weiterleitungsdatenbank abgeglichen 115. Wenn der (erkannte)

Name des Empfängers in der Weiterleitungsliste gefunden wurde 116, werden im nächsten Schritt mögliche Vorausverfügungen betrachtet. Die Erkennung dieser Vorausverfügungen 102b läuft parallel zu anderen Prozessen wie Zeichenerkennung und Wörterbuchzugriffen ab. Die Resultate dieser Erkennung werden jedoch erst dann ausgewertet, wenn eine Sendung als weiterzuleitende Sendung erkannt wurde. Die Erkennung der Vorausverfügungen ist deshalb wichtig, weil in vielen Ländern ein Großteil der Sendungen bei Adressänderungen nicht nachgesandt, sondern an die Absender (vor altem an Großversender) zurückgeschickt werden sollen, da die Absender ihre Adressdatenbanken pflegen möchten.

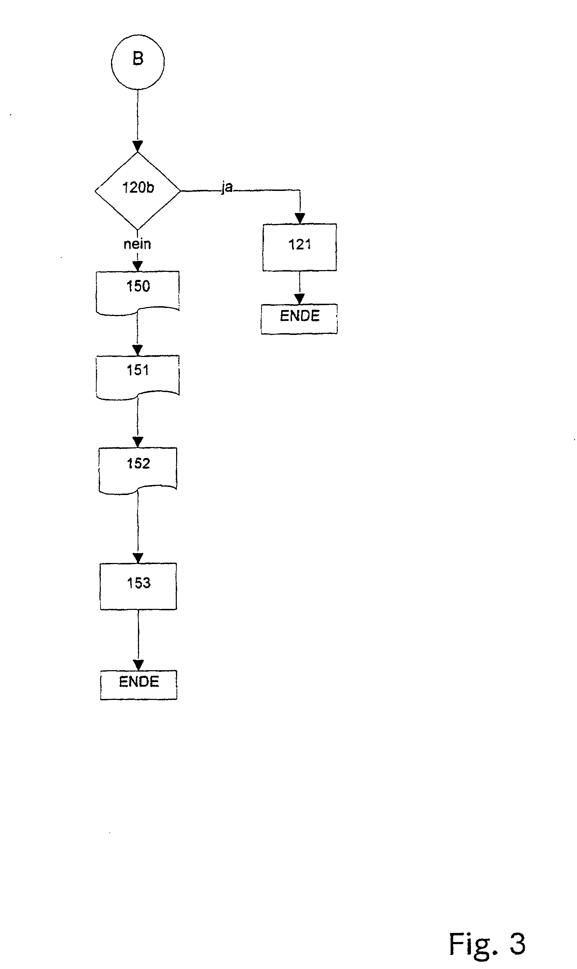

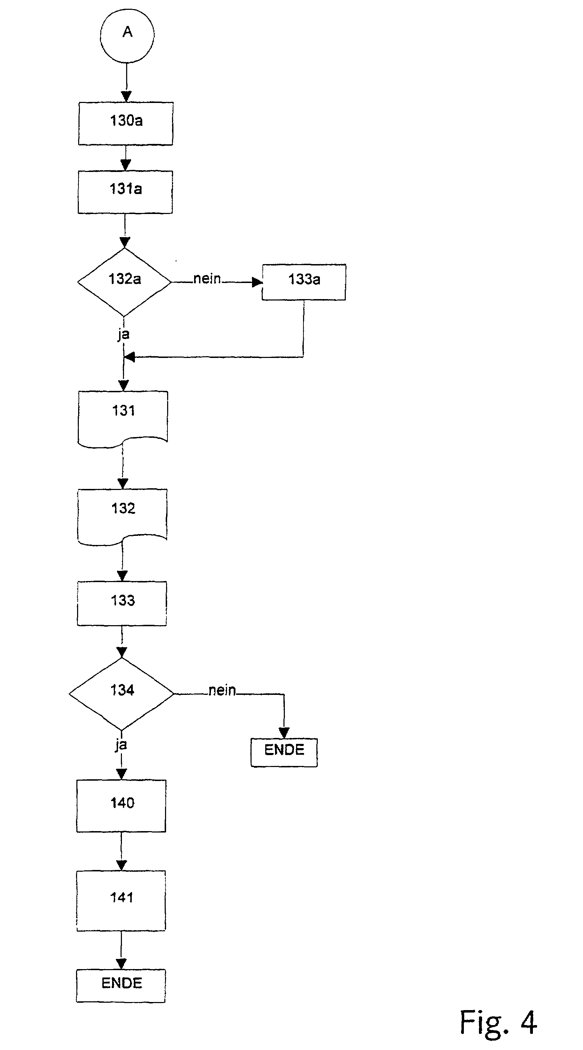

Die erste Vorausverfügung, die abgeprüft wird, ist "Zurück an Absender". Dazu wird der erkannte Text mit einer Liste von erlaubten Vorausverfügungstexten verglichen 120a. Falls es sich bei der Sendung um eine Rücksendung handelt, wird sie weiterbehandelt wie in Fig. 4 dargestellt. Falls es sich um eine Nachsendung handelt, wird so verfahren wie in Fig. 3 gezeigt.

### Fig. 3

### Nachsenden:

Falls die Sendung mit einer Vorausverfügung der Art "Nicht nachsenden - Sendung vernichten" (z.B in Deutschland bei Infopost) bedruckt ist, wird dies durch einen Vergleich des erkannten Vorausverfügungstextes mit einer Liste von erlaubten Texten 120b festgestellt. In diesem Fall wird der Brief der manuellen Bearbeitung zugeführt 121.

Falls keine Vorausverfügung festgestellt wurden, wird die Sendung nachgesandt. Dazu wird der Barcode der neuen Empfängeradresse als Zielcode aufgedruckt 150 und ein Nachsendevermerk 151 sowie die neue Adresse 152 als Klartext aufgedruckt. Abschließend wird die Sendung entsprechend der neuen Adresse sortiert 153.

### Fig. 4

### Rücksenden:

Wenn eine Sendung durch Erkennen einer Vorausverfügung oder eines Zustellervermerkes als Rücksendung identifiziert wurde, muß die Absenderadresse gelesen werden 130a. Anschließend findet ein Wörterbuchabgleich 131a statt. Falls kein eindeutiges Erkennungsergebnis für die Absenderadresse vorliegt 132a, wird die Erkennung durch Videokodieren 133a ergänzt Sobald die Absenderadresse erfolgreich identifiziert wurde, wird diese in Form eines Barcodes auf den Brief als Zielcode aufgebracht 131. Desweiteren wird ein Rücksendevermerk und - falls bekannt - der Rücksendegrund als Klartext auf die Sendung aufgedruckt 132. Anschließend wird die Sendung entsprechend der Absenderadresse sortiert 133.

Für jede Rücksendung wird außerdem ein Datenbankeintrag mit Absenderadresse und neuer sowie alter Empfängeradresse gemacht 140. Falls der Kunde (Absender) dies wünscht 134, werden für ihn regelmäßig Adressänderungsberichte erstellt 141 und ihm zustellt. Dies erlaubt dem Absender eine sehr einfache Pflege seines Adressbestands.

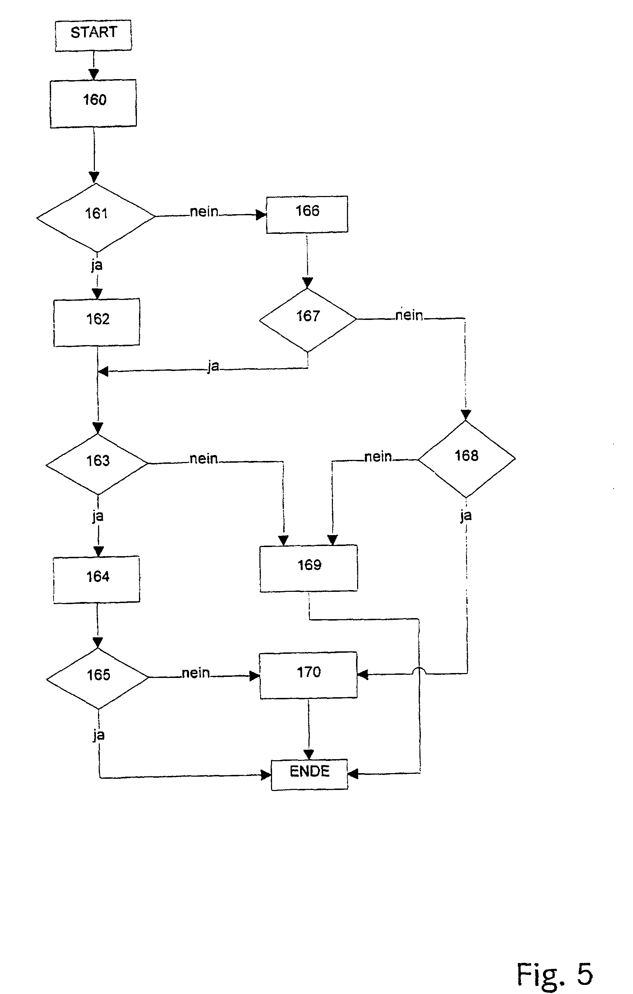

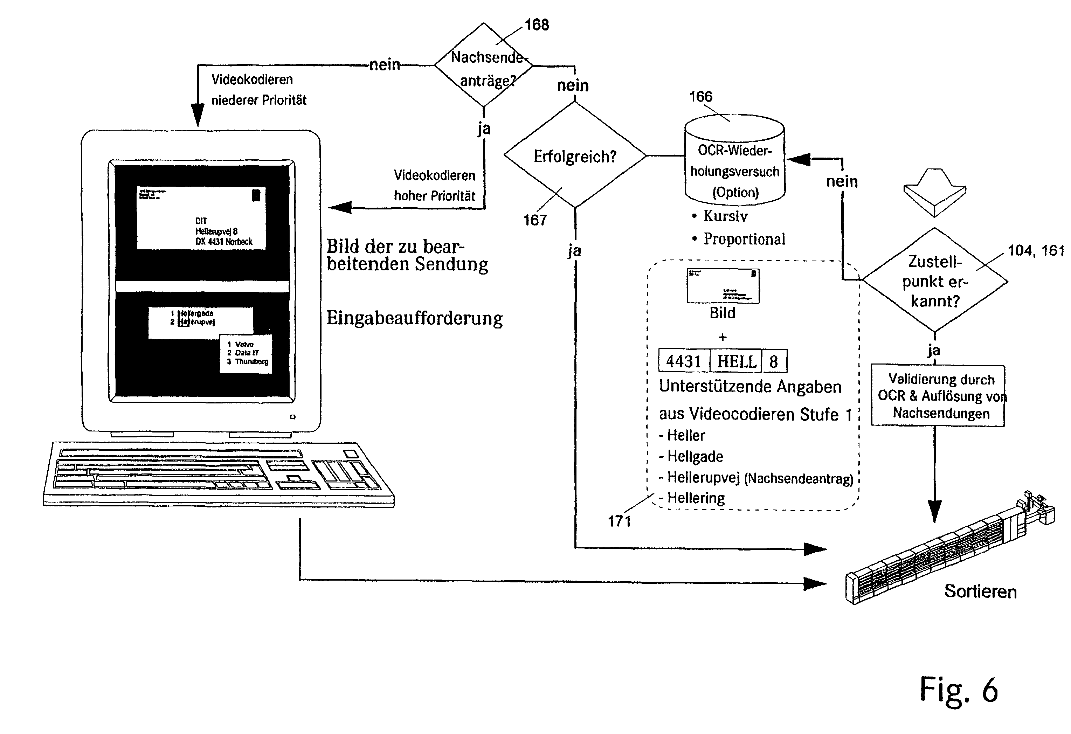

Die Fig. 5 und 6 geben nochmais eine detaillierte Übersicht über das bereits bei Fig. 1 erwähnte 3-Phasen-Videocodieren:
Zurückgewiesene Sendungen (Rejects) verursachen für den Nach- oder Rücksendeprozess erhöhte Schwierigkeiten. Das Ziel ist, auch Rejects wenn immer möglich online, also während sich die Sendung noch in der Verzögerungsstrecke befindet, aufzulösen. Sollte dies nicht möglich sein, so muß abgesichert werden, daß jeglicher verwandte offline Prozess abgeschlossen ist, bevor die Sendung das Abgangszentrum verläßt
Daher wird das Zeichenerkennungssystem (OCR) nahtlos mit einem 3-Phasen-Videocodieren, wie in der Fig. 4a dargestellt, verbunden:
   (1) Wenn kein eindeutiges OCR-Ergebnis vorliegt, so wird die fehlende Information in einer ersten Stufe des Videokodierens durch die Eingabe einer sogenannten Accelerator Keying Sequence AKS 160 ergänzt. Ein AKS ist ein kurzer, leicht erkennbarer Extakt fester Länge, der die Abgangs- und einen Teil der Eingangsadressinformation auflöst. Wenn die AKS nur auf einen Wörterbucheintrag als Ergebnis schließen läßt 161, wird eine Validierung dieses Ergebnisses mit dem OCR 162 vorgenommen. Damit ist der Zustellpunkt der Sendung erkannt und dieses Ergebnis ausreichend abgesichert. Wenn für diesen Zustellpunkt Nachsendeanträge existieren 163, wird mit Hilfe der Zwischenresultate des OCR versucht, den Namen des Empfängers zu ermitteln 164. Wenn der Name erkannt werden kann 165, kann die Entscheidung, ob es sich um eine Nach-/Rücksendung handelt oder nicht, getroffen werden.
   (2) Wenn die AKS mehrere Wörterbucheinträge als Ergebnis zulassen würde, so wird versucht, diese Mehrdeutigkeit mit Hilfe eines OCR Wiederholungsversuchs 166 aufzulösen. Wenn dieser Versuch erfolgreich ist 167, so wird wie oben unter Punkt (1) beschreiben weiterverfahren.
   (3) Falls unter Punkt (1) ein Nachsendeantrag für den zu betrachtenden Zustellpunkt existiert, der Name des Empfängers aber nicht gelesen werden kann 165 oder falls der OCR Wiederholungsversuch unter Punkt (2) nicht zu einem eindeutigen Ergebnis geführt hat und eines oder mehrere der möglichen Ergebnisse, hier: Zustellpunkte, einen Nachsendeantrag besitzen 168:
   (4) ==> Dann wird an den On-line Videokodierplatz für Selektionen eine Priorität zur Auflösung dieses Rejects und damit auch zur Auflösung/Bearbeitung einer möglichen Nachsendung/Rücksendung 170 gesandt.
   (5) Im anderen Fall (wenn es sich auf keinen Fall um einen Nachsendekandidaten handelt) wird der Videokodierauftrag mit einer niedrigen Priorität gestartet 169.

Die 3. Phase wird anhand der Fig. 6 näher erläutert.

Dabei erfolgt eine Entscheidung 104,161 ob eine vollständige Auswertung der Adressinformation eines Abbildes bei der Video-Codierung erfolgt ist. Ist die Entscheidung positiv (Ja) kann die entsprechende Sendung bei Weiterleitungsverfügungen nach Lesen des Empfängernamens und Vergleich in der Weiterleitungsdatei mit einem Barcode versehen werden. Die Sendung wird dann mit üblichen Mitteln weiter sortiert. Bei einer negativen Entscheidung (Nein) erfolgt erfindungsgemäß eine weitere automatische Auswertung unter Verwendung der Ergebnisse der Videokodierung 166, d.h. bei dieser weiteren automatischen Auswertung stehen dem OCR-Prozessor neben den auf dem Abbild dargestellten Informationen die durch die Videokodierung gewonnenen Informationen zur Verfügung: im obigen Beispiel das Tripel "4432", "Hell", "8". Dies ist in Fig. 6 symbolisch durch den Inhalt des Kreises 171 zum Ausdruck gebracht. Anschließend erfolgt eine Entscheidung 167, ob nunmehr eine vollständige Auswertung des betreffenden Bildes stattgefunden hat. Im positiven Fall (Ja) wird die entsprechende Information zum weiteren Sortieren der Sendung verwendet analog wie nach einer positiven Entscheidung beim Entscheidungspunkt 104, 161. Ist die Entscheidung negativ (Nein), erfolgt eine weitere Videokodierung mit hoher Priorität bei Nachsendeanträgen und geringer Priorität ohne Nachsendeanträge, Entscheidung 168, unter Verwendung der Ergebnisse der weiteren automatischen Auswertung. Dabei werden dem Operator eine Anzahl von Alternativen zur Selektion vorgeführt, aus denen eine Selektion vorzunehmen ist.
Kann die neue Adresse nicht in der Zeit ermittelt werden, in der die betreffende Sendung im Zwischenspeicher gepuffert ist, so wird durch den Drucker ein ID-Kode auf die Sendung aufgedruckt, so daß die Sendung offline weiterbearbeitet werden kann. Dies erfolgt mit hoher Priorität.

Der zeitliche Schlüsselfaktor ist der, daß alle Nach- oder Rücksendungen aufgelöst sind, bevor eine Sendung das Abgangszentrum verläßt. Für Rejects, die auf keinen Fall Nachsendekandidat sein können, können andere, einfachere Formen der Videokodierung verwendet werden, da eine Ausnutzung der Transportzeit zum Videokodieren bei diesen Sendungen keine physikalischen Umwege verursachen kann.

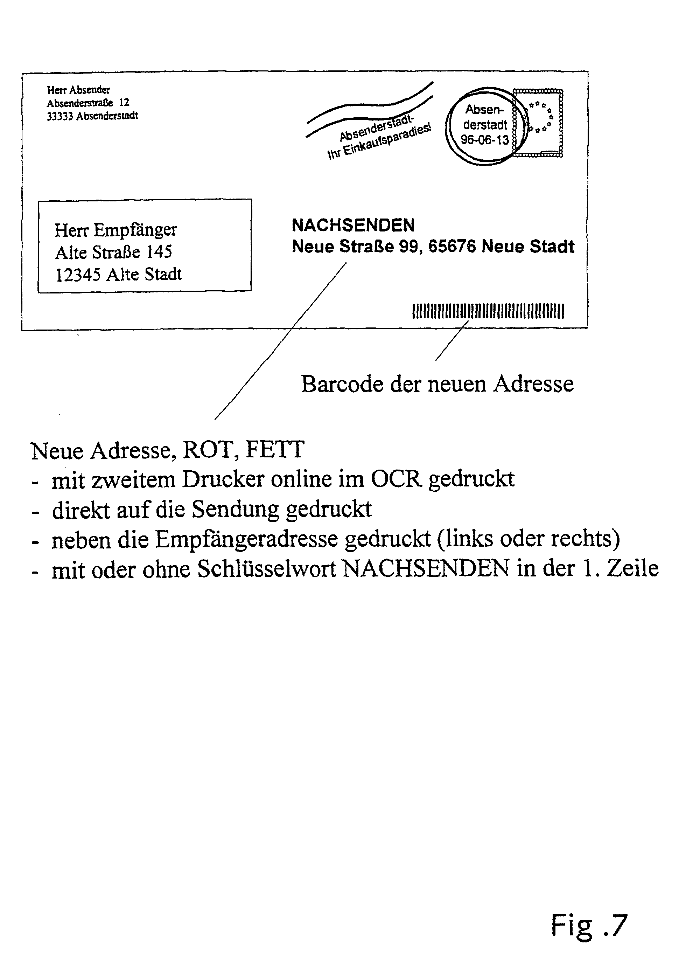

Fig. 7 zeigt einen nachzusendenden Brief nach der Bearbeitung mit dem Online-System für die automatische Verarbeitung von Nach- und Rücksendungen. Der auf die Sendung aufgebrachte Barcode enthält als Zieladresse die neue Adresse des Empfängers. Der Nachsendevermerk (z.B. "Nachsenden") und die neue Adresse, bestehend aus Straße, Haus- und evtl. Appartmentnummer, Postleitzahl und, bei ausreichend Platz, auch Ortsname werden rechts oder links neben der alten Adresse aufgedruckt.
Der Aufdruck erfolgt direkt auf die Sendung online im OCR oder in einer Sortiermaschine. Es wird in fetter, roter Schrift gedruckt, die auch auf unruhigem Sendungshintergrund noch vom Zusteller lesbar ist.

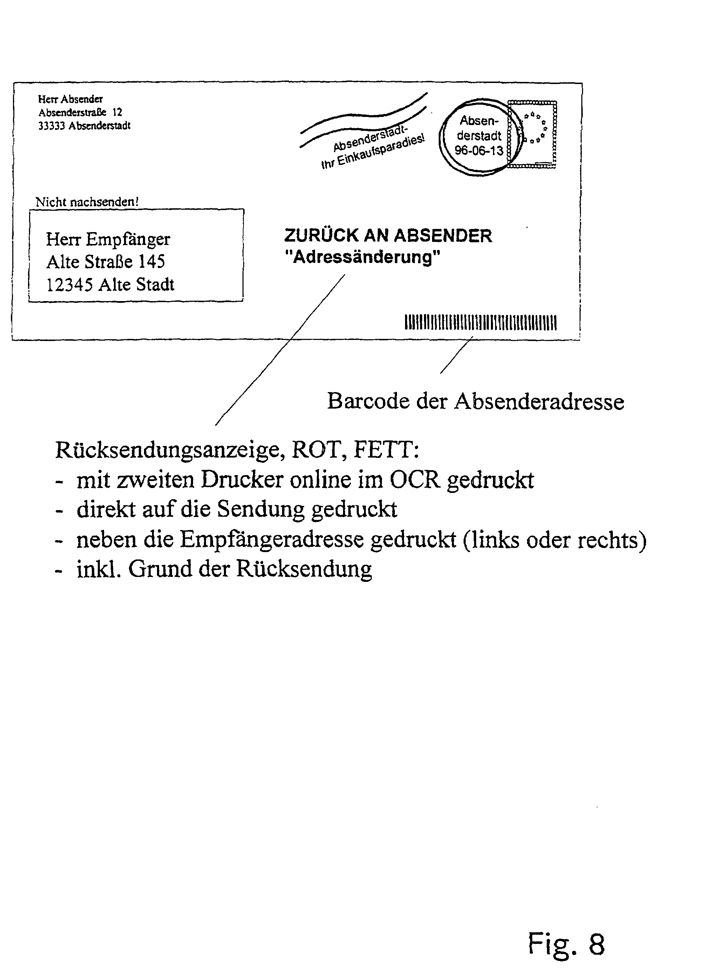

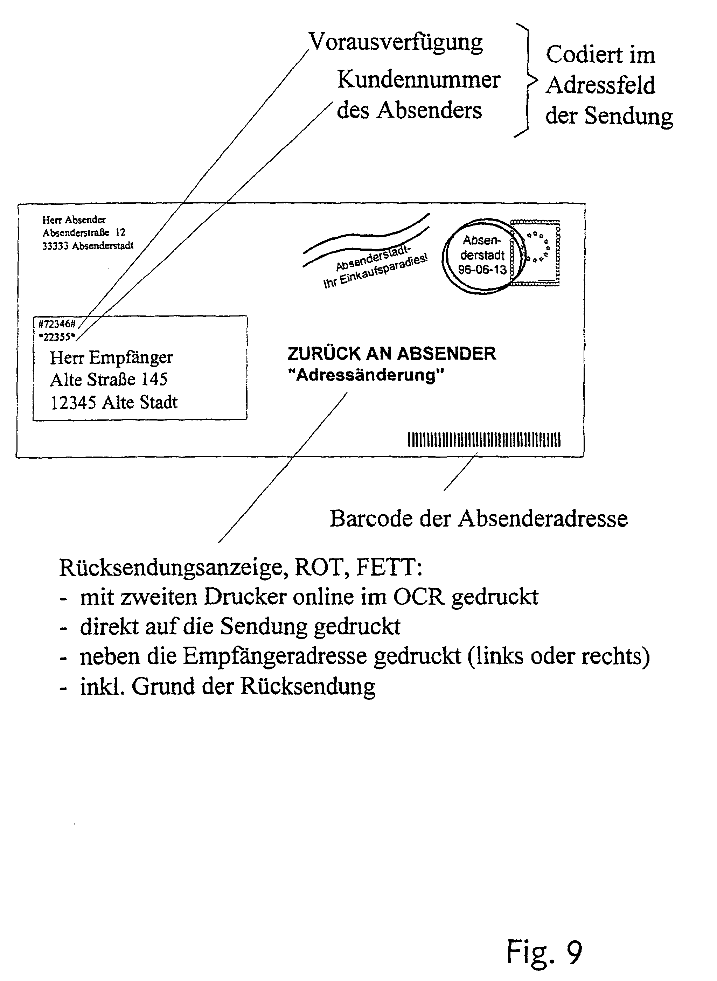

Die Figuren 8 und 9 zeigen einen rückzusendenden Brief nach der Bearbeitung mit dem Online System für die automatische Verarbeitung von Nach- und Rücksendungen. Der auf die Sendung aufgebrachte Barcode enthält als Zieladresse die Adresse des Absenders. Der Rücksendevermerk (z.B. "Zurück an Absender") und der Grund der Rücksendung (z.B. "Adressänderung") werden rechts oder links neben der alten Adresse aufgedruckt. Die Absenderadresse selbst wird nicht nochmals aufgedruckt. Sie muß vom Absender selbst in von Menschen lesbarer Form auf die Sendung aufgebracht werden, wenn er Vorausverfügungen verwendet.
Der Aufdruck erfolgt direkt auf die Sendung online im OCR. Es wird in fetter, roter Schrift gedruckt, die auch auf unruhigem Sendungshintergrund noch vom Zusteller lesbar ist.

Die Sendungen in den Figuren 8 und 9 unterscheiden sich darin, daß der Absender in der Sendung auf Fig. 9 seine Kundennummer beim Postdienst und die Art seiner Vorausverfügung a/s Code im Adressfeld über der Empfängeranschrift selbst aufgedruckt hat.

DieVerarbeitung einer solchen Rücksendung ist wesentlich einfacher als die einer Sendung mit "normaler" Vorausverfügung, wie sie bei Fig. 2 beschrieben ist:
- Das Suchen nach der ROI "Absenderanschrift" (ROI = Regions of Interest) und das Lesen der Absenderanschrift entfällt. Statt dessen wird nur die Kundennummer des Absenders als oberste Zeile im Adressfeld gelesen.
- Die parallele Verarbeitung "Erkennung der Vorausverfügung entfällt", die Art der Vorausverfügung wird einfach mit dem Zeichenerkennungssystem im Adressfeld als zweitoberste Zeile ausgelesen.
- Die Rücksendung einer so präparierten Sendung ist sehr viel zeit- und resourcensparender als die einer normalen, mit textueller Vorausverfügung und Absenderadresse beschrifteten Sendung.

Die Voraussetzungen für die Verwendung einer codierten Absenderadresse und Vorausverfügung sind:
1. Ein Vertrag zwischen Postdienst und Kunde: Der Kunde bekommt eine Kundennummer.
2. Eine Kundendatenbank beim Postdienst.
3. Eine Liste mit erlaubten Codes für mögliche Vorausverfügungen.
4. Die Kodierung von Kundennummer und Vorausverfügung im Adressfeld oberhalb der Empfängeradresse.
5. Das Aufbringen einer vom Zusteller lesbaren Absenderadresse, damit dieser die Rücksendung zustellen kann.

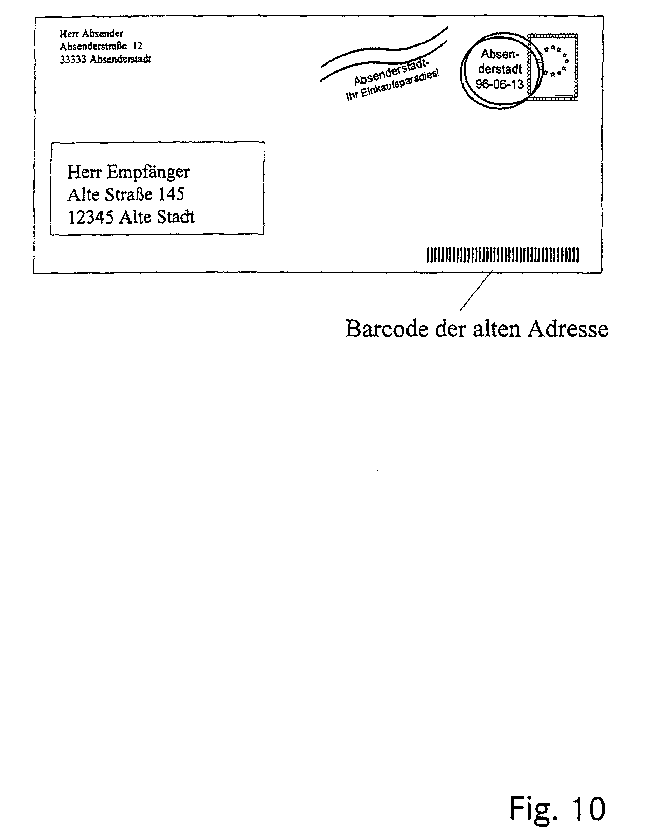

Die Figuren 10, 11 und 12 demonstrieren die Behandlung einer Rücksendung aufgrund eines Zustellervermerks.

Fig. 10 zeigt einen Brief, der im Online-System für die automatische Verarbeitung von Nach- und Rücksendungen nicht als Nach- bzw. Rücksendekandidat erkannt wurde, da dem System keine Information über eine Adressänderung vorlag. Der Brief wurde daher mit dem Barcode der als richtig erkannten Adresse bedruckt und an den für den ehemaligen Wohnort des Empfängers zuständigen Zusteller geleitet. Erst der Zusteller kann feststellen, daß:
- der Empfänger die Annahme verweigert,
- unbekannt verzogen ist,
- verstorben oder aufgelöst ist.

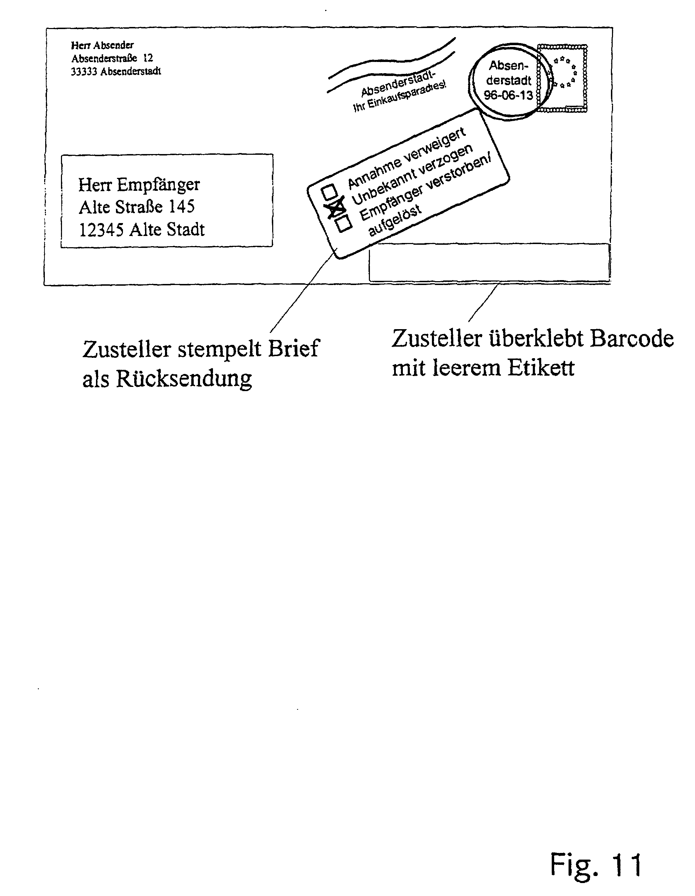

Wie in Fig. 11 gezeigt wird, stempelt der Zusteller daher den Brief als Rücksendung (Aufbringen eines Zustellervermerks) und kreuzt den Grund für die Rücksendung von Hand an. Der alte Barcode wird mit einem unbedruckten Etikett (Label) überklebt und damit unkenntlich gemacht. Der Brief kann auf diese Weise maschinell statt manuell weiterbehandelt werden. Er wird vom Zusteller direkt der Abgangssortierung zugeführt.

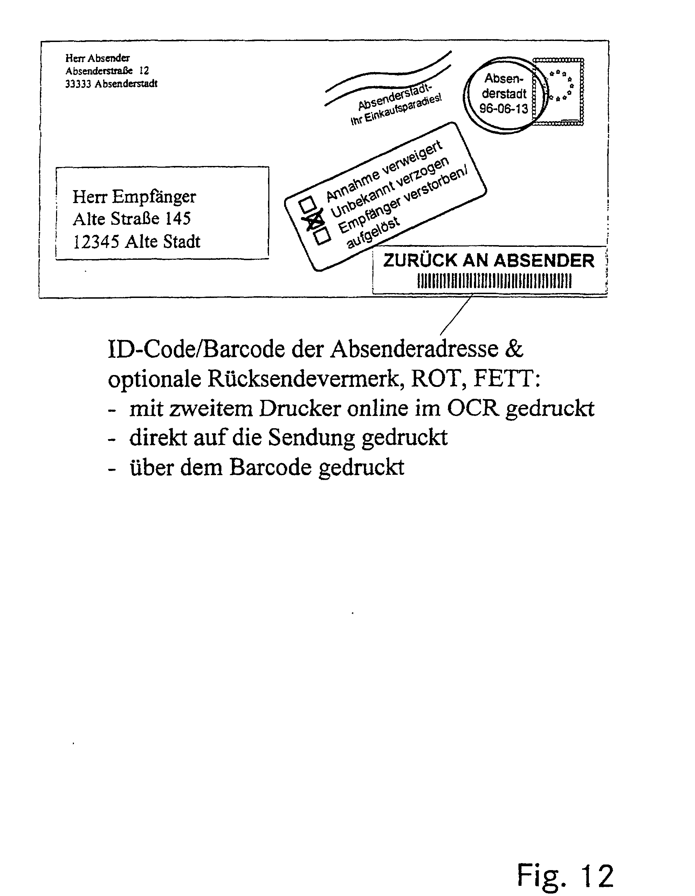

Fig. 12 zeigt denselben Brief nach der Behandlung durch das Online System für die automatische Verarbeitung von Nach- und Rücksendungen. Die Erkennung des Zustellervermerks hat den Rücksendestempel des Zustellers erkannt und die Sendung der Verarbeitung von Rücksendungen (wie bei den Fig. 2, 3 und 4 beschrieben) zugeführt. Dort wurde der Barcode der Absenderadresse und der Rücksendevermerk "Zurück an Absender" (optional, in roter, fetter Schrift) auf das unbedruckte Etikett online im OCR aufgebracht.

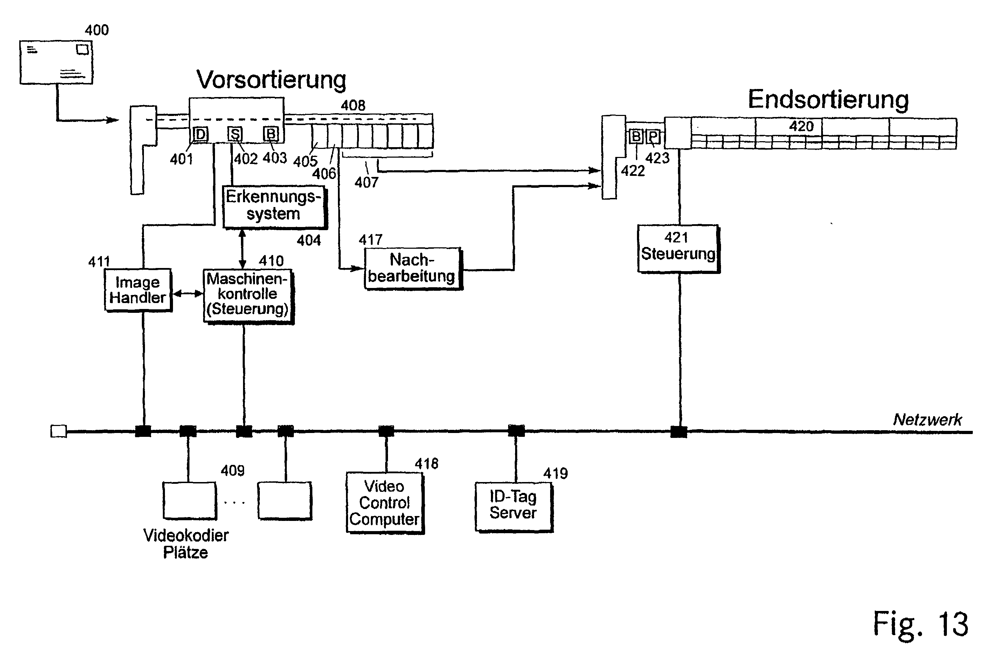

Fig. 13 zeigt die Maschinenkonfiguration für das Online System für die automatische Verarbeitung von Nach- und Rücksendungen. Eine Sendung 400 wird in ein Integriertes Adresslese- und Videocodiersystem, hier mit "Vorsortierung" bezeichnet, eingespeist. In der Maschine wird es von einem hochentwickelten Scanner 402 abgetastet, nachdem es einen Pre-Barcode-Detektor 401 passiert hat. Das abgetastete Pixelbild wird an das Erkennungssystem 404 gesandt, dessen Aufgaben und Funktionen im Detail in den vorhergehenden Ausführungen beschrieben wurden. Das Erkennungssystem wird von einem Videocodiersystem unterstützt, an dessen Videocodierplätzen 409 das Videocodierpersonal entweder Adressinformation eingibt oder Selektionen aus Listen mit Altemativen vornimmt. Ein Video Control Computer 418 steuert die Übertragung von Bildern vom Erkennungssystem zum Videokodiersystem ebenso wie die Übertragung der Kodierergebnisse zurück zur Maschinenkontrolle 410, um das Bedrucken der Sendungen mit dem Zielbarcode 403 als auch das Sortieren in das richtige Grobverteilfach 407 zu ermöglichen.

Sendungen, die während der Zwischenspeicherung nicht online ausgewertet werden können, bekommen einen ID-Tag aufgedruckt (mit dem Barcode Drucker 403), der in einem ID-Tag-Server 419 zusammen mit der Sortiercode-Information, der vollständigen Adressblockinformation und der Information über evtl. vorhandenen Zustellervermerke oder Vorausverfügungen gespeichert wird.

Die Grobverteilfächer 407 enthalten sowohl Sendungen mit korrekten Adressen als auch solche, die nach- oder rückzusenden sind und deren Adressen durch das Online System für die automatische Verarbeitung von Nach- und Rücksendungen korrigiert werden konnten. Dieser Briefstrom geht direkt in die nächste Verarbeitungsstufe, welche gemeinhin die Endsortierung ist

In der Feinverteilmaschine, hier mit "Endsortierung" bezeichnet, wird der Barcode jeder Sendung mit einem Barcodeleser 422 gelesen. Wenn ein Zielcode erkannt wird, wird die Sendung direkt in das zugehörige Feinverteilfach 420 ausgesteuert. Wenn ein ID-Tag erkannt wird, so erfolgt eine ID-Tag-Anfrage an den ID-Tag-Server 419. Der Server überträgt nach einer solchen Anfrage die zugehörige Sortier-, Address- und sonstige Information, die unter dieser ID gespeichert ist, an die Steuerung der Feinverteilmaschine 421. Die nachzusendende Sendung wird mit den Vermerken "Nachsenden" oder "Zurück an Absender", der neuen Adresse oder dem Rücksendegrund bedruckt. Dies geschieht mit Hilfe einer Textdrucker 423 in der Feinverteilmaschine. Dann wird die Sendung entsprechend ihrer Zielinformation in das entsprechende Feinverteilfach 420 ausgesteuert.

Eine geringe Menge von Sendungen, die nicht online erkannt werden konnten, werden in der Vorsortierung in ein spezielles Grobsortierfach 406 ausgesteuert. Diese Sendungen sind mit einem ID-Tag gekennzeichnet. Die Pixelbilder dieser Sendungen werden in einem Image Handler 411 gespeichert und werden im folgenden mit höchster Priorität der Videokodierung übergeben. Die Ergebnisse der Videokodierung werden unter dem ID-Tag im ID-TAG-Server abgelegt. Anschließend werden die Sendungen nochmals der Vorsortierung zugeführt, welche sie nun nach einer ID-Tag-Abfrage beim ID-Tag-Server in das entsprechende Grobverteilfach aussteuert. Sie können dann im normalen Briefstrom der Feinsortierungsstufe übergeben werden.

Sendungen, die zwar einen Zustellervermerk tragen (vom Zusteller als Rücksendungen erkannt und mit einem Rücksendestempel markiert wurden) aber noch barcodiert sind, können nicht weiter maschinell verarbeitet werden, sondern müssen in ein spezielles Grobsortierfach 405 ausgesteuert werden.

## Patentansprüche

1. Verfahren zur online-Bearbeitung von weiterzuleitenden Sendungen mit folgenden Verfahrensschritten:
a. Aufnahme eines Abbildes der mit Namen, Adressen und sonstigen Angaben versehenen Sendungsseiten und Transport der Sendungen in einen Zwischenspeicher,
b. Digitalisierung und Speicherung des jeweiligen Abbildes,
c. Ermitteln von interessierende Informationen, wie Absendernamen und -adresse, Empfängernamen und -adresse, Nach- und Rücksendeaufschriften, enthaltenen Bereichen,
d. Klassifizieren der interssierenden Bereiche,
e. Automatisches Lesen von Nach- und Rücksendeaufschriften und Lesen von Empfängernamen und -adresse mittels OCR-Leser einschließlich einer automatischen Überprüfung des Ergebnisses in einer Namens-Adreß-Datenbank und bei Nichtübereinstimmung in einer weiteren Datenbank, in der Weiterleitungsanforderungen bezogen auf Zustellpunkte gespeichert sind, wobei bei einem Rücksendevermerk eines Zustellers auf der Sendung sofort nur die Absenderadresse gelesen wird,
f. Vorgezogenes Auswerten von nicht eindeutig mittels OCR-Leser gelesenen Namen und Adressen einschließlich Überprüfung in der Namen-Adreß-Datenbank sowie in der Weiterleitungsdatenbank jener Sendungen durch Videokodieren ihrer Abbilder, für deren mögliche Zustellpunkte mindestens eine Weiterleitungsverfügung vorhanden ist und/oder die Nach- oder Rücksendeaufschriften besitzen,
g. Drucken der neuen Empfängeradresse lesbar und kodiert sowie von Weiterleitungshinweisen auf die den Zwischenspeicher verlassenden Sendungen,
h. Verteilen der Sendungen gemäß der neuen Adresse sowie von Weiterleitungshinweisen.

2. Verfahren nach Anspruch 1 mit folgenden Verfahrensschritten zur Realisierung der Videokodierung des Verfahrensschrittes f:
- Zuführen der in der automatischen OCR-Auswertung nicht eindeutig gelesenen Abbilder der Sendungen einer ersten Videokodierung,
- Zuführen derjenigen Abbilder, die bei der Videokodierung nicht eindeutig ausgewertet worden sind, unter Verwendung der Ergebnisse der ersten Videokodierung einer weiteren automatischen Auswertung im OCR-Leser,
- vorgezogenes Auswerten derjenigen Abbilder von Sendungen, die bei der weiteren automatischen Auswertung nicht eindeutig ausgewertet worden sind und für deren mögliche Zustellpunkte mindestens eine Weiterleitungsverfügung vorhanden ist, in einer weiteren Videokodierung unter Verwendung der Ergebnisse der weiteren automatischen Auswertung.

3. Verfahren nach Anspruch 2,
bei dem bei der ersten Videokodierung eine Extraktionscodierung gemäß vorgegebener Extraktionsregeln erfolgt.

4. Verfahren nach Anspruch 2,
bei dem bei der weiteren Videokodierung eine Selektrionskodierung derart erfolgt, daß aus den nicht eindeutigen Ergebnissen der Extraktionskodierungen eine Selektrion vorgenommen wird.

5. Verfahren nach Anspruch 1,
bei dem im Falle des nichteindeutigen automatischen Lesens des Rücksendevermerkes eines Postboten mittels OCR-Leser der Rücksendevermerk einer Videokodierung zugeführt wird.

6. Verfahren nach Anspruch 1,
bei dem im Falle des nichteindeutigen automatischen Lesens der Absenderadresse mittels OCR-Leser diese einer Videokodierung zugeführt wird.

7. Verfahren nach Anspruch 1,
bei dem Vorausverfügungen des Absenders und dessen Adresse oder Kundennummer zusätzlich zur lesbaren Information kodiert im Empfängeradreßfeld aufgedruckt werden.

8. Vorrichtung zur online-Bearbeitung von weiterzuleitenden Sendungen. bestehend aus
- einer Vorrichtung zur Erzeugung und Speicherung von Abbildern von Sendungen,
- einer OCR-Lesevorrichtung zur automatischen Auswertung der auf den Sendungen befindlichen Informationen wie Absendername und Adresse, Empfängername und -adresse, Nach- und Rücksendeaufschriften einschließlich der Ergebnisüberprüfungen in einer Namen-Adreß-Datenbank und einer Weiterleitungsdatenbank,
- einer Vorrichtung zur Videokodierung der Abbilder der Sendungen, die eine Anzahl von Videokodierplätzen aufweist, einschließlich der Ergebnisüberprüfung in der Namen-Adreß-Datenbank und der Weiterleitungsdatenbank,
- einer Imagecontroller zur Steuerung des Datenflusses zwischen der Vorrichtung zur automatischen Auswertung und der Vorrichtung zur Videokodierung, wobei der Imagecontroller derart ausgebildet ist, daß die Abbilder derjenigen Sendungen mit in der OCR-Lesevorrichtung nicht eindeutig gelesenen Namen und Adressen der Vorrichtung zur Videokodierung zuerst zugeführt werden, für deren mögliche Zustellpunkte mindestens eine Weiterleitungsverfügung vorhanden ist, und daß bei der Videokodierung nicht eindeutig ausgewertete Sendungsabbilder unter Verwendung der Ergebnisse der Videokodierung wieder der OCR-Lesevorrichtung zu einer weiteren automatischen Auswertung zuführbar sind,
- einer Druckvorrichtung zum Aufdrucken von Adressen in lesbarer und kodierter Form sowie von Weiterleitungshinweisen,
- einem Zwischenspeicher zur Speicherung der gescannten Sendungen vor dem ersten Sortiervorgang,
- mindestens einer Sortiervorrichtung zur Sortierung der Sendungen gemäß der jeweiligen gelesenen Verteilinformationen.

## Claims

1. Method for the on-line processing of items of mail to be forwarded, having the following method steps:
a. recording an image of the sides of the item of mail provided with names, addresses and other information, and transporting the items of mail into an intermediate store,
b. digitizing and storing the respective image,
c. determining areas containing information of interest, such as sender's name and address, recipient's name and address, forwarding and return labels,
d. classifying the areas of interest,
e. automatically reading forwarding and return labels and reading recipient's name and address by means of OCR readers, including automatic checking of the result in a name/address database and, if there is no agreement, in a further database in which forwarding requirements on the basis of delivery points are stored, but if there is a return note from a deliverer on the item of mail, only the sender's address being read immediately,
f. preferential evaluation of names and addresses not read unambiguously by means of OCR readers, including checking in the name/address database and in the forwarding database, by means of video encoding of their images, of those items of mail for whose possible delivery points there is at least one forwarding instruction and/or which have forwarding or return labels,
g. printing the new recipient's address legibly and in encoded form, and also forwarding instructions, onto the items of mail leaving the intermediate store,
h. distributing the items of mail in accordance with the new address and also forwarding instructions.

2. Method according to Claim 1, having the following method steps for implementing the video encoding of method step f:
- feeding the images of the items of mail not read unambiquously in the automatic OCR evaluation to a first video encoding operation,
- feeding those images which have not been evaluated unambiquously during the first video encoding operation to further automatic evaluation in the OCR reader, using the results of the first video encoding operation,
- preferentially evaluating those images of items of mail which have not been evaluated unambiguously during the further automatic evaluation and for whose possible delivery points there is at least one forwarding instruction, in a further video encoding operation, using the results of the further automatic evaluation.

3. Method according to Claim 2, in which extraction encoding in accordance with predefined extraction rules is carried out in the first video encoding operation.

4. Method according to Claim 2, in which selection encoding is carried out during the further video encoding operation in such a way that a selection is made from the non-unambiguous results of the extraction encoding operations.

5. Method according to Claim 1, in which, in the event that the return note of a postman is not automatically read unambiguously by means of the OCR reader, the return note is fed to a video encoding operation.

6. Method according to Claim 1, in which, in the event that the sender's address is not automatically read unambiguously by means of the OCR reader, the said address is fed to a video encoding operation.

7. Method according to Claim 1, in which prior instructions from the sender and his address or customer number are printed on in the recipient's address field in encoded form in addition to the legible information.

8. Apparatus for the on-line processing of items of mail to be forwarded, comprising
- an apparatus for generating and storing images of items of mail,
- an OCR reading apparatus for the automatic evaluation of the information located on the items of mail, such as sender's name and address, recipient's name and address, forwarding and return labels, including the result checks in a name/address database and a forwarding database,
- an apparatus for the video encoding of the images of the items of mail, which has a number of video encoding stations, including the result check in the name/address database and the forwarding database,
- an image controller for controlling the data flow between the apparatus for automatic evaluation and the apparatus for video encoding, the image controller being constructed in such a way that the images of those items of mail having names and addresses which have not been read unambiguously in the OCR reading apparatus and for whose possible delivery points there is at least one forwarding instruction are fed first to the apparatus for video encoding, and in that images of items of mail which have not been evaluated unambiguously during the video encoding operation can be fed again to the OCR reading apparatus for further automatic evaluation, using the results of the video encoding operation,
- a printing apparatus for printing addresses on in legible and encoded form, and also forwarding instructions,
- an intermediate store for storing the scanned items of mail before the first sorting operation,
- at least one sorting apparatus for sorting the items of mail in accordance with the distribution information read in each case.

## Revendications

1. Procédé de traitement en ligne de courrier ou d'envois à reacheminer, comprenant les étapes de procédé suivantes:
a) relevé d'une image des faces de l'envoi pourvues des noms, adresses et autres indications, et transport des envois dans un tampon intermédiaire,
b) numérisation et mise en mémoire de l'image respective,
c) détermination de zones renfermant des informations intéressantes, telles que nom et adresse de l'expéditeur, nom et adresse du destinataire, inscriptions de réexpédition et de retour,
d) classification des zones intéressantes,
e) lecture automatique d'inscriptions de réexpédition et de retour et lecture du nom et de l'adresse du destinataire au moyen d'un lecteur à reconnaissance optique de caractères OCR, y compris un contrôle automatique du résultat dans une base de données de noms et d'adresses, et, en cas de non concordance, dans une autre base de données dans laquelle sont mémorisées des prescriptions de re-acheminement se rapportant à des points de distribution, la présence d'une mention de retour d'un préposé à la distribution sur l'envoi, entraînant immédiatement la seule lecture de l'adresse de l'expéditeur,
f) traitement avancé des noms et adresses non lus de manière incontestable au moyen des lecteurs à reconnaissance optique de caractères OCR, y compris le contrôle dans la base de données de noms et d'adresses ainsi que dans la base de données de re-acheminement, par codage vidéo des images des envois pour les points de distribution possibles desquels il existe au moins une disposition de re-acheminement, et/ou qui possèdent des inscriptions de réexpédition ou de retour,
g) impression de la nouvelle adresse de destinataire de manière lisible et codée, ainsi que des indications de re-acheminement, sur les envois quittant le tampon intermédiaire,
h) répartition des envois conformément à la nouvelle adresse ainsi qu'aux indications de re-acheminement.

2. Procédé selon la revendication 1, présentant les étapes de procédé suivantes pour la réalisation du codage vidéo de l'étape de procédé f:
- amenée des images des envois, non lues de manière incontestable dans le système de traitement automatique à reconnaissance optique de caractères OCR, à un premier codage vidéo,
- amenée des images, qui n'ont pas été traitées de manière incontestable lors du codage vidéo, avec utilisation des résultats du premier codage vidéo, à un traitement automatique supplémentaire dans le lecteur à reconnaissance optique de caractères OCR,
- traitement avancé des images d'envois, qui n'ont pas été traitées de manière incontestable lors dudit traitement automatique supplémentaire et pour les points de distribution possibles desquels il existe au moins une disposition de re-acheminement, dans un système de codage vidéo supplémentaire en utilisant les résultats dudit traitement automatique supplémentaire.

3. Procédé selon la revendication 2, selon lequel on effectue lors du premier codage vidéo, un codage d'extraction selon des règles d'extraction prescrites à l'avance.

4. Procédé selon la revendication 2, selon lequel on effectue lors du codage vidéo supplémentaire, un codage de sélection, de façon à réaliser une sélection à partir des résultats non incontestables du codage d'extraction.

5. Procédé selon la revendication 1, selon lequel, dans le cas d'une lecture automatique non incontestable de la mention de retour d'un facteur, au moyen d'un lecteur à reconnaissance optique de caractères OCR, la mention de retour est amenée à un codage vidéo.

6. Procédé selon la revendication 1, selon lequel, dans le cas d'une lecture automatique non incontestable de l'adresse de l'expéditeur, au moyen d'un lecteur à reconnaissance optique de caractères OCR, celle-ci est amenée à un codage vidéo.

7. Procédé selon la revendication 1, selon lequel des dispositions préalables de l'expéditeur et son adresse ou numéro de client sont imprimés en supplément, de manière codée, dans le champ d'adresse du destinataire, en guise d'information lisible.

8. dispositif pour le traitement en ligne d'envois à expédier, constitué par:
- un dispositif destiné à produire et enregistrer des images d'envois,
- un dispositif de lecture à reconnaissance optique de caractères OCR pour le traitement automatique des informations se trouvant sur les envois, telles que le nom et l'adresse de l'expéditeur, le nom et l'adresse du destinataire, les inscriptions de réexpédition et de retour, y compris les contrôles de résultats dans une base de données de noms et d'adresses et une base de données de re-acheminement,
- un dispositif pour le codage vidéo des images des envois, qui comprend un certain nombre d'emplacements de codage vidéo, y compris le contrôle des résultats dans la base de données de noms et d'adresses et la base de données de re-acheminement,
- un contrôleur d'images pour commander le flux de données entre le dispositif de traitement automatique et le dispositif de codage vidéo, le contrôleur d'images étant conçu de façon telle que les images des envois avec des noms et adresses non lus de manière incontestable dans le dispositif de lecture à reconnaissance optique de caractères OCR, et pour les points de distribution possibles desquels il existe au moins une disposition de re-acheminement, sont amenés d'abord au dispositif de codage vidéo, et que des images d'envois non traitées de manière incontestable lors du codage vidéo, peuvent à nouveau être amenées au dispositif de lecture à reconnaissance optique de caractères OCR pour un traitement automatique supplémentaire en utilisant les résultats du codage vidéo,
- un dispositif d'impression pour imprimer des adresses sous forme lisible et codée, ainsi que des indications de re-acheminement,
- un tampon intermédiaire pour l'accumulation des envois scannés avant la première opération de tri,
- au moins un dispositif de tri pour trier les envois conformément aux informations de distribution respectivement lues.
